# EUROPEAN PATENT APPLICATION

(11) **EP 1 455 266 A2**
(43) Date of publication of application: **08.09.2004**
(21) Application number: 04001902.8
(22) Date of filing: 29.01.2004
(51) Int. Cl.: G06F 3/12

(54) **Automatic insertion of special pages into black and white digital printing jobs**

(30) Priority: 12.02.2003 US 446923 P
(71) Applicant: Eastman Kodak Company, Rochester, New York 14650 (US)
(72) Inventor: Kremer, Karl-Heinz, Rochester NY 14624 (US)
(74) Representative: Franzen, Peter

(57) **Abstract**

A print shop environment including multiple printers (122HV, 122C) under the control of computer resources (116, 118, 120) to automatically print complex documents is disclosed. According to the disclosed embodiment, a companion plug-in application operates in combination with an authoring application, to permit a human operator to select certain special pages, such as those to be printed by a color printer (122C). These pages are assigned to a media type that is not valid at a high-volume printer (122HV), causing an invalid job configuration for that page. The special pages are printed at the color printer (122C), and that output is loaded into an inserter (135) in the high-volume printer (122HV). The main job is modified to interpret each of the invalid job configuration pages to insert commands, so that the special pages can be inserted by the inserter (135) at the correct location in the output job, when printed by the high-volume printer (122HV). The complex documents are thus be generated and printed in an automated fashion.

## Description

### BACKGROUND OF THE INVENTION

This invention is in the field of digital printing, and is more specifically directed to the automated generation of printed output using multiple printing machines.

Recent advances in the field of digital computer hardware and computer software have provided a large and still-increasing number of computer users with highly sophisticated document creation tools. Many business and individuals now have the ability to create pleasing and creative high-quality documents from their personal computer workstations. These documents include conventional business documents, books, brochures, signage, and the like, which range in complexity from simple text documents to complex documents that include full-color images and multiple paper sizes and types. Indeed, the term "desktop publishing" has come into vogue, to describe the capability of a common computer user to publish works that previously required expensive equipment and highly trained personnel. These improved computer tools have also increased the productivity of trained graphic artists in creating and publishing printed works.

The complexity and appearance of the printed documents has placed additional pressure on the processes and equipment for producing printed output. Indeed, it may be argued that the widespread deployment of creative software tools has enticed many authors to create more complex documents than otherwise would have been created. For example, color output is now a staple of many printed documents, and is often expected of certain documents, such as sales and professional brochures. The ease with which document content can be edited and rearranged, for example to personalize the document for specific recipients or to frequently update document content, also adds pressure to the printing processes, requiring rapid turnaround of printed output, often in relatively small run sizes.

By way of further background, many high capacity printing machines have the ability to print on varying media (i.e., paper stock), so that a particular printed document may have papers of various weights and colors within the same printed document. This feature is especially important for high-throughput printing machines. For example, the DIGIMASTER 9150i digital press, available from Heidelberg USA, Inc., includes two paper supply modules, each with three drawers for supplying different media types (or the same media type, if desired) to the marking engine. The printing job forwarded to the DIGIMASTER 9150i can select the media on a page by page basis, with the resulting output having different paper stock for different pages. For example, front and back covers may be printed with relatively stiff oversized colored paper, with the bulk of the document printed on both sides (duplex) of standard paper, chapter headings printed on one side of standard paper, and tab dividers printed on stiff tabbed paper. Each of these paper stock types can be loaded into one or more of the media drawers of the DIGMASTER 9150i, which in turn will use the particular paper stock as directed by the digital printing job instructions.

Most high throughput printers, such as the DIGIMASTER 9110 and DIGIMASTER 9150i digital presses available from Heidelberg USA, Inc., are black and white printers, meaning that they are capable of printing with black toner only. Many modern full color digital printing machines are also available in the industry, for example the NEXPRESS 2100 color digital press available from Heidelberg USA, Inc. As is well known in the art, however, the per-page cost of full color printing is significantly higher than that of black and white printing. In addition, the page throughput of color printers is necessarily lower than that of black and white printers. Accordingly, it is not efficient in cost or time to print large documents that have only a few color pages on a color digital printer. From a printing standpoint, it is instead theoretically more efficient to print the relatively few color pages of such documents on a color printer, such as the NEXPRESS 2100 color digital press, and print the bulk of the document on a high throughput black and white printer, such as the DIGIMASTER 9110 or DIGIMASTER 9150i digital presses.

However, the conventional use of two printing machines to produce the color and black and white output requires human intervention to create the final document. Specifically, the color content must be collated by hand into the black and white output to create the ultimate documents. Of course, the manual labor to perform this task reduces the efficiency and throughput of the overall printing operation, primarily because the efficiencies of automated finishing systems cannot be utilized. In addition, the hand-collation is prone to errors, reducing the quality of the printed output.

The DIGIMASTER series of printers available from Heidelberg USA, Inc. include an inserter function, which inserts one or more sheets of paper stock into the printed output, at a point after the marking engine and fuser. This permits the ultimate output to include the pages printed by the printing machine itself, into which the inserter has inserted color sheets, covers, transparencies, and the like, that were preprinted on a different machine (or not printed at all, if desired). These printers thus provide automated collating and finishing capability for complex jobs that have pages printed on more than one printer.

Even with this capability, the printing job printed on the black and white printer must contemplate that certain pages are to be replaced with those printed elsewhere. According to conventional techniques, the printing job is set up so that the black and white printer does not print the pages with color content, but instead requests inserts from the post-fuser inserter in place of those pages. At the setup of the printing job, the operator removes the color pages from the digital job stream, and add insert requests (i.e., requests for color inserts) in their place. This process is somewhat error prone, requiring some amount of proof prints to ensure that the job will be printed and assembled accurately.

By way of further background, U.S. Patent No. 6,407,820 B1, describes an insertion control process that may be accomplished by the operator flagging pages in the digital document to be printed, to indicate the pages that are to be printed in color or are otherwise special. The flagged digital document is forwarded to the print server, which detects the flags and diverts the flagged pages to the color printer rather than the main production black and white printer; the print server will then stall the main body of the document, upon reaching the flagged "exception" pages, indicating that the operator should retrieve the flagged printed color pages from the color printer and place them into the inserter. The automated finishing system of the main production printer will then produce the completed output document.

### BRIEF SUMMARY OF THE INVENTION

It is therefore an object of this invention to provide an automated method and system for setting up a complex printing job into which special pages are to be inserted.

It is a further object of this invention to provide such a method and system in which the special pages are color-printed pages, printed on a color printer that is separate from the main production (i.e., black and white) printing machine.

It is a further object of this invention to provide such a method and system in which color pages are automatically removed from a digital job stream containing both color and black and white output, and are automatically replaced with color insert requests.

It is a further object of this invention to provide such a method and system that requires minimum operator intervention.

It is a further object of this invention to provide such a method and system in which the pages that are to be printed by a color printer are selected within the discretion of a human operator.

Other objects and advantages of this invention will be apparent to those of ordinary skill in the art having reference to the following specification together with its drawings.

The present invention may be implemented by functionality in the definition of the job to be printed, in which certain pages are selected to be printed on a printing machine other than the main production black and white printer. The selection of these special pages is preferably made in connection with a page description language version of the document that is sent to the printing system. The selected special pages become associated with an illegal media type for the black and white production printer; these pages are also sent to the appropriate printer (e.g., a color printer) for printing and collating, and the collated special pages are placed in the post-fuser inserter of the main production printer. Prior to printing the page description format file, the illegal media type requests are interpreted as insert requests. At the high-volume printer, the special pages are inserted from the post-fuser inserter into the collated finished output.

### BRIEF DESCRIPTION OF THE SEVERAL VIEWS OF THE DRAWING

Figure 1 is a schematic block diagram, illustrating a networked printing shop arrangement into which the preferred embodiment of the invention may be implemented.

Figure 2 is a flow diagram illustrating the operation of the printing shop arrangement of Figure 1, according to the preferred embodiment of the invention.

Figure 3 is an illustration of a windowed application, executed by a job preparation station in the networked arrangement of Figure 1, according to the preferred embodiment of the invention.

Figure 4 is a flow chart illustrating the operation of the printing of a complex document including special pages according to the preferred embodiment of the invention.

Figure 5 is a schematic diagram illustrating the result of an exemplary document printed according to the preferred embodiment of the invention.

### DETAILED DESCRIPTION OF THE INVENTION

The present invention will be described in connection with its preferred embodiment, which includes a printing environment having multiple printing machines operated by a network of servers and workstations. It is contemplated, however, that this invention may be applied to a wide range of printing applications and systems, in which the benefits of this invention will accrue. Accordingly, it is to be understood that this description of the preferred embodiment of the invention is presented by way of example only, and that this description is not to limit the true scope of the invention as claimed.

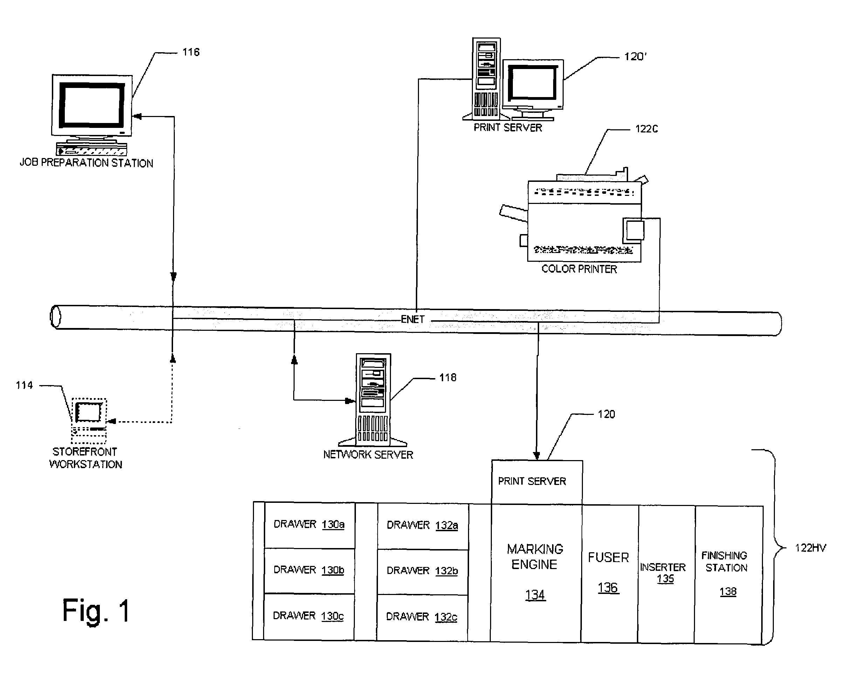

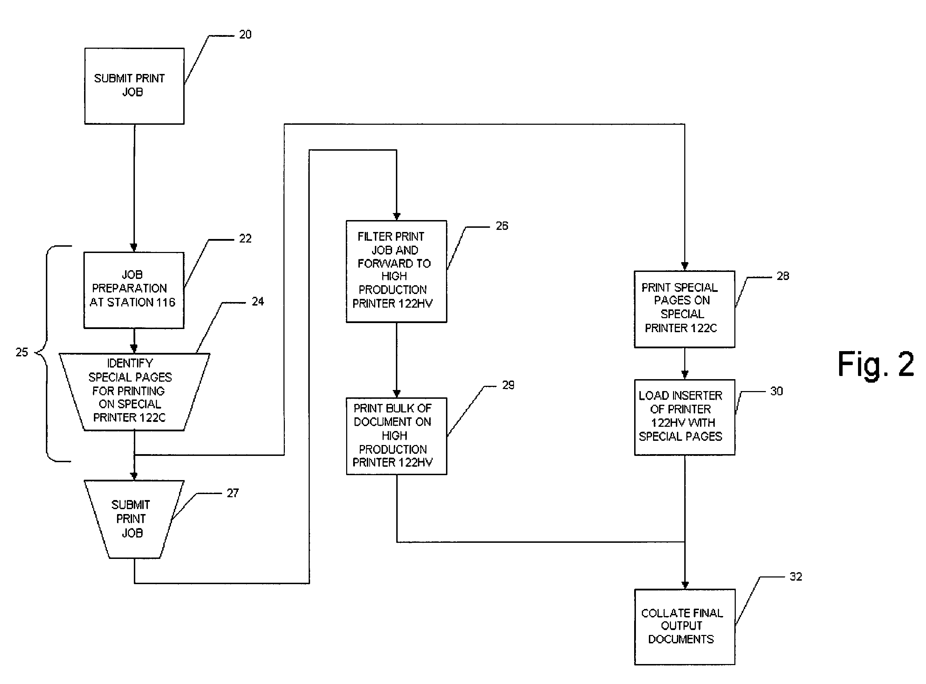

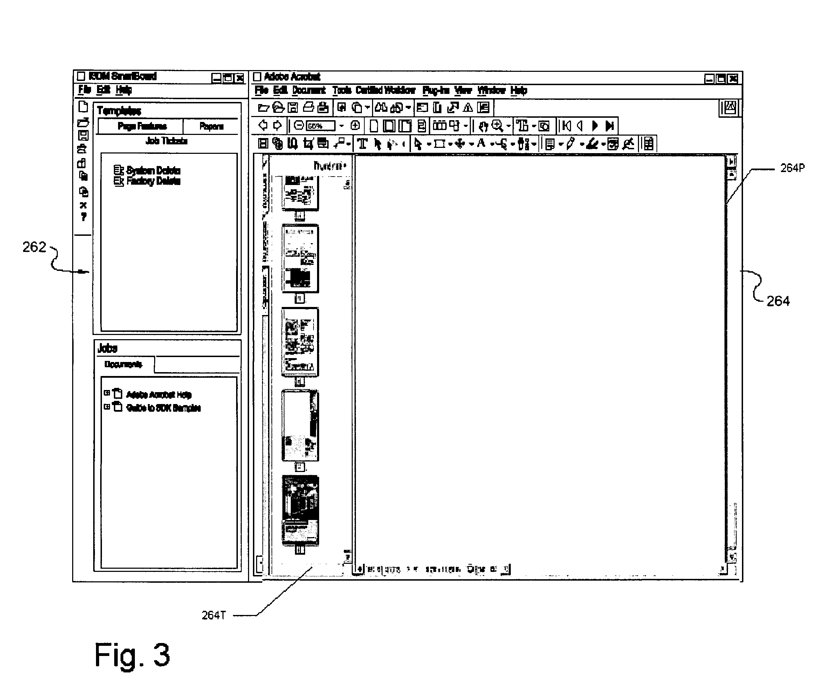

Figure 1 illustrates a portion of a print shop environment into which the preferred embodiment of the invention is implemented. The overall print shop environment in which the portion of Figure 1 resides can be quite varied, depending upon the facility and its function (e.g., commercial service bureau, or corporate print shop). An example of a full service commercial high volume print shop configuration into which the portion illustrated in Figure 1 can be implemented is described in U.S. Patent No. 6,407,820 B1. This U.S. Patent No. 6,407,820 B1 also describes an exemplary workflow into which the preferred embodiment of the invention can be readily implemented, to which the following description will refer by way of example.

In the environment of Figure 1, various computer stations are networked with multiple printing output devices (printers) 122HV, 122C (referred to in general as printing output devices 122). These computer stations include one or more job preparation stations 116, one or more network servers 118, and at least one print server 120. Additional workstations, for example so-called "storefront" workstations 114 for use by print customers in the context of a commercial print shop or service bureau, may be optionally included in the environment. Of course, the number of stations 116, servers 118, 120, and printing output devices 122 will vary with the size a capability of the print shop environment. In this example, station 116, servers 118, 120, and printers 122C, 122HV are interconnected over a conventional Ethernet network ENET. Of course, other network arrangements and technologies, including both local area network and wide area networks of various configurations, and combinations thereof, can alternatively be used as the network backbone.

Job preparation station 116 is preferably a personal computer or workstation, loaded with and capable of executing workflow management software for the creation, editing, and managing of print jobs. A preferred example of job preparation station 116 is a conventional modem computer hardware platform, such as a personal computer or workstation based on PENTIUM class microprocessors available from Intel Corporation or ATHLON class microprocessors available from Advanced Micro Devices, Inc., on which the IMAGESMART DOCUMENT MASTERING software suite, available from Heidelberg Digital, L.L.C., is installed. In its job preparation and management functions, it is contemplated that job preparation station 116, with its software resources, provides the system user, such as the end print customer or print shop personnel, with the ability to define the print job and receive the input documents. Alternatively, or in combination, storefront workstations 114 may be provided to provide the end customer or print shop retail clerk with job submission and definition functions; storefront workstations 114 may similarly be implemented by way of conventional personal computers or workstations, deployed at the print shop environment and connected to network ENET. Job preparation station 116 also preferably provides the print shop personnel with the ability to include added-value print service functions such as adding page numbers across multiple documents, Bates number successive pages according to an external numbering scheme, adjust the page layout for tab stock, align the printed pages to account for binding, and adjust the document to account for printing artifacts such as binder's creep and the like.

Network server 118 is a conventional network server, as known in the art, which may optionally be included in the network according to this embodiment of the invention. When implemented in this print shop environment, network server 118 may include a document library for the storage of documents that are to be forwarded to and printed by printers 122. Exemplary implementations of the document library within network server 118 include the DOCSMART document management system available from MosaicSoft, the INTRA.DOC document management system available from Intranet Solutions, Inc., and the DOCFUSION document management system available from Hummingbird, Inc. The computer processing hardware of network server 118 may be a conventional server, as known in the art. Network server 118 preferably includes software operating according to the Open Document Management Architecture (ODMA) standard. The computing capability of network server 118 is preferably of adequate capacity and performance to permit the manipulation, management, storage, and archiving, within its document library, of both the documents and job tickets of print jobs for the shop. Network server 118 also preferably facilitates and manages the flow of print jobs from storefront workstations 114, if present, to job preparation station 116, from job preparation station 116 to print servers 120 and to printing output devices 122, in the conventional manner and also according to the following description. Alternatively, the document library and print job management functions may be performed by job preparation station 116 itself, in which case network server 118 need not be present. In this alternative arrangement, job preparation station 116 will submit the jobs directly from its own storage resources to printing output devices 122.

Print server 120 is a computer resource located within the overall network, for providing such functions as spooling and queuing of print jobs. According to the preferred embodiment of the invention, print server 120 is a computer resource implemented as part of a printer, such as high-volume printer 122HV shown in Figure 1. Alternatively, or in addition to print server 120, external print server 120' may be implemented, in the form of a conventional computer workstation coupled to network ENET that operates a software print server engine and software print server application, running under a UNIX or WINDOWS operating system. If both print server 120 in printer 122HV and external print server 120' are implemented, external print server 120' may provide a first queue of print jobs, with printer-based print servers (such as print server 120 in high-volume printer 122HV) queuing print jobs for that print resource. Further in the alternative, print server 120 may be a software print server engine and application running on another computer or workstation already in the network, such as job preparation station 116 or network server 118. The print server application provides a user interface, under which the operator can configure and manage the operation of the print server. The print server engine provides automated processes for spooling and queuing print jobs, including the directing of various print jobs to specific ones of printers 122. In the case of an external print server, the engine may also balance the print load among the various printers 122 to maximize throughput and utilization, and provide a communication gateway for translating the multiple input communication and print protocols into protocols comprehendible by printers 122.

According to this embodiment of the invention, printers 122 in the print shop environment of Figure 1 include at least two printing output devices. In this example, color printer 122C is preferably a production quality color digital press, such as the NEXPRESS 2100 available from Heidelberg USA, Inc. High-volume printer 122HV, on the other hand, is preferably a high-volume black and white printer, such as the DIGIMASTER 9110 network imaging system or the DIGIMASTER 9150i digital press, both available from Heidelberg USA, Inc. In addition to the printers illustrated in Figure 1, other printing output devices 122 having different capabilities and performance levels, as well as different printing costs per page, may also be implemented in the print shop environment. Further in the alternative, color printer 122C may be externally located at a different print shop from that of high-volume printer 122HV, in which case those pages and documents to be printed on color printer 122C would be sent to color printer 122C at its external location.

According to this embodiment of the invention, high-volume printer 122HV is configured to have multiple sources of paper stock, as well as other functions, for example as mentioned above relative to the DIGIMASTER 9150i printer. According to this exemplary arrangement, high-volume printer 122HV includes two paper sources, each with three paper drawers 130a through 130c, 132a through 132c, respectively; of course, high-volume printer 122HV may alternatively have only one paper source, or more than two paper sources, each with one or more paper drawers. Paper drawers 130, 132 may each store a different type of paper stock, either in composition, size, or color, or one or more of paper drawers 130, 132 may store the same paper stock. In any event, high-volume printer 122HV is aware of the paper stock, stored in each of paper drawers 130a through 130c, 132a through 132c, and the media types associated with the paper stock, so that high-volume printer 122HV can draw from the appropriate paper drawer 130, 132 when called upon by the page description language for a document being printed.

In this example, high-volume printer 122HV also includes a conventional electrographic marking engine 134, by way of which the image is formed on each sheet of paper stock from the selected paper drawer 130a through 130c, 132a through 132c, for example by the conventional electrographic placement of toner on the paper sheet, and fuser 136, which fuses the toner to the sheet in the conventional manner. While it is contemplated that high-volume printer 122HV is of the electrographic (or electrophotographic) type, due to the high throughput and high quality provided by this printing technology in modern printers, any type of printing technology may be used in connection with this invention.

High-volume printer 122HV also includes finishing station 138, which groups, staples, punches, folds, binds, and otherwise arranges printed pages produced by marking engine 134 and fuser 136, according to the manner indicated on a job ticket generated by the print customer, and as instructed from the job preparation process, described in further detail below. In addition, high-volume printer 122HV also includes inserter 135, which is one or more sources of paper stock that is located downstream from marking engine 134 and fuser 136. The paper stock stored in inserter 135 is thus a source of paper stock that finishing station 138 can draw from to arrange the final output printed documents, but is not a source of paper stock that can be printed by high-volume printer 122HV. In the DIGIMASTER printers mentioned above, inserter 135 includes three paper drawers from which pages (of one to three media types or paper stock types) can be drawn and inserted at the appropriate points in a print job. According to this embodiment of the invention, so-called "special" pages will be loaded into inserter 135, and automatically arranged into the printed output in a manner determined by a human operator. The operations involved in effecting the definition, printing, and insertion of these special pages according to the preferred embodiment of the invention will be descried in further detail below.

The general operation of the print shop environment of Figure 1 according to the preferred embodiment of the invention will now be described relative to Figure 2. This operation begins with the submission of a print job, in process 20. As described in the above-incorporated U.S. Patent No. 6,407,820 B1, this process 20 includes the placing of an order with the print shop, whether in person, on-line, by mail, or over the telephone. The submission of process 20 also includes the customer's delivery of the document input to the print shop in person, on-line, or by mail. In addition, as suggested by Figure 1, the submission of the job in process 20 may be made from a storefront workstation 114, at which the customer may interactively define the print job (number of copies, paper options, finishing options), and provide an electronic copy of the document to be printed; hard copy input may also be scanned and digitized at storefront workstation 114. A job "ticket" may be initiated in this process 20, such a job ticket (either in electronic or paper form) including the identity of the customer, the number of copies made, details about the paper and binding options selected, printing options such as image shifts, edge erase, and the like, and other information pertaining to the print job and how the job is to be performed.

In process 25, preparation of the print job is next performed. It is contemplated that process 25 will typically be executed at job preparation station 116 in cooperation with network server 118, in installations such as that shown in Figure 1. Preparation process 25 includes a conventional job preparation process 22 in which the submitted documents are prepared for printing according to the instructions stated in the job ticket. This preparation of process 22 thus effectively receives the document in whatever form submitted (whether already in electronic form, or as a hard copy, or a combination of these and other forms) and prepares a electronically stored digital "document" in a ready-for-printer format that can be submitted to printers 122. According to the preferred embodiment of the invention, the preferred ready-for-printer format is the PORTABLE DOCUMENT FORMAT ("PDF" or ".pdf") developed by Adobe Systems, Inc.. Other ready-for-printer formats that may be used in connection with this invention include the POSTSCRIPT format also developed by Adobe Systems, Inc., and the printer control language PCL developed by Hewlett Packard Company, but for clarity of this description the PDF format will be used by way of example.

A wide variety of tasks may be involved in job preparation process 22, depending upon the form of the submitted input. Pages that are submitted in hard copy form (rather than submitted as electronically stored output from scanned pages) are preferably scanned or otherwise digitized into a ready-for-printer format in process 22. Documents that are in their native application file formats (e.g., documents in their form as produced by a word processing program such as the WORD program available from Microsoft Corporation) are converted into the ready-for-printer format in process 22. Image files, even those such as the Tagged Image File Format ("TIFF") in which the images are effectively bit map images, are also converted into the ready-for-printer format in process 22, if only to include printer control instructions for arranging the images on the pages. Further, job preparation process 22 also includes the sequencing and arranging of the pages and files into the finished document, along with the inclusion of covers, tabbed dividers, and other non-document features into the document to be printed. Job preparation process 22 further includes the modification of the ready-for-printer document to accommodate the printing process itself, such as removing artifacts in the scanned images, masking over unwanted text or images, inserting page numbers or Bates stamp numbers across the document, and accounting for inaccuracies in the printing process such as binder's creep.

As mentioned above, multiple printing output devices 122 are available within the print ship environment of Figure 1, for example including color printer 122 and high-volume black and white printer 122HV. The variation in the capability and cost of the various printing output devices 122 in the print ship environment of Figure 1 provides the operator or customer with a range of choices for the printing of a given document, especially a complex document that includes pages of different type. For example, a typical somewhat complex document may include many pages that are printable in black and white, with several pages interspersed within the document that require full color printing. Referring to the example of Figure 1, while color printer 122C is capable of relatively high throughput, this throughput is necessarily less than that of high-volume printer 122HV. The cost per page of documents printed on color printer 122C is also necessarily higher than that of documents printed on high-volume printer 122HV, due to the color printing capability of color printer 122C. This invention is directed to the optimized utilization of these printing resources for a complex document including special pages, such as color pages, that are contained within a document that may be largely printed on high-volume printer 122HV.

According to the preferred embodiment of the invention, preparation process 25 also includes special page identification process 24, in which special pages are identified prior to forwarding the document to print server 120 for initiating of the print production process. In this context, special pages refer to those pages that are to be printed on a printing output machine 122 other than that which will be used to print the bulk of the document. An example of such special pages, as mentioned above, are those pages that are to be printed in full color, by color printer 122C in the example of Figure 1, while the bulk of the document is printed in black and white on high-volume printer 122HV.

The identification of special pages in process 24 is preferably performed at job preparation station 116. While identification process 24 is illustrated as following job preparation process 22 in the flow diagram of Figure 2, for the sake of clarity, it is contemplated that identification process 24 will typically be one of the multiple tasks performed during job preparation process 22 itself. According to this preferred embodiment of the invention, identification process 24 is performed by way of workflow management software executed by job preparation station 116. An example of workflow management software into which the functionality of identification process 24 can be implemented is the IMAGESMART DOCUMENT MASTERING software suite available from Heidelberg USA, Inc.. An example of the functionality of the workflow management software of this preferred embodiment of the invention, and corresponding to the IMAGESMART DOCUMENT MASTERING software suite, is described in U.S. Patent Publication No. 2002/0131075 A1.

Specifically, identification process 24 is preferably implemented by way of an additional function provided within the SMARTBOARD application available from Heidelberg USA, Inc. The SMARTBOARD application expands the functionality of the IMAGESMART DOCUMENT MASTERING software by providing fully integrated print tickets on both the job and page level, including the ability to identify the special pages in process 24 according to this embodiment of the invention. The SMARTBOARD application also provides the functions of document importing, paper catalog handling and synchronization with one print engine, and support for submitting print jobs to high-volume printers such as high-volume printer 122HV. This functionality is based on the PORTABLE DOCUMENT FORMAT (PDF) and the architecture of the ACROBAT authoring application, available from Adobe Systems, Inc. The application according to this embodiment of the invention preferably implements special page identification process 24 by way of a graphical user interface, in which the application operates in cooperation with a PORTABLE DOCUMENT FORMAT document preparation program, such as described in U.S. patent application S.N. 10/235,263 filed September 4, 2002, and in U.S. patent application S.N. 10/235,557 filed September 5, 2002. By way of further explanation, the graphical user interface approach for workflow management represents various objects such as documents, tickets, operations, and hardware resources, on a computer video display as icons, or in a tree-structure or pull-down menu manner, by way of which a human user can select and execute various operations using a conventional computer pointing device. The IMAGESMART DOCUMENT MASTERING and SMARTBOARD applications are implemented as a series of plug-ins that are detected and loaded at runtime into the authoring application, and thus can use the functionality of the authoring application (e.g., ACROBAT) by using simple function calls within that authoring application. Alternatively, the companion application may be a standalone application, which cooperates with other applications by way of interprocess communications (IPC) via the operating system of the computer.

In this preferred embodiment of the invention, the companion application provides a multiple window framework around a page definition language authoring application, such as the ACROBAT application. Figure 3 illustrates an example of this multiple window framework. It should be understood that, as in many modem conventional graphical user interface environments, the particular position and arrangement of the various windows are under the real-time control of the human user.

Figure 3 illustrates a portion of a video display, for example from job preparation station 116, in which window 264 corresponds to a window of the ACROBAT authoring application, and window 262 corresponds to the plug-in companion application to the ACROBAT application according to the preferred embodiment of this invention. As evident from Figure 3, window 264 illustrates the document to be printed, including one page of the document in subwindow 264P, and a set of "thumbnail" views of multiple pages of the document in subwindow 264T. It is contemplated that special page identification process 24 according to this embodiment of the invention will be most easily executed by way of thumbnail subwindow 264T, as will be described below. The output of the ACROBAT authoring application, operating in combination with the SMARTBOARD application, is a ready-for-printer document, such as in the PORTABLE DOCUMENT FORMAT (.pdf), which can be forwarded directly to one of printing output devices 122. Consistent with the SMARTBOARD companion application and the IMAGESMART DOCUMENT MASTERING suite, as described in the above-referenced U.S. Patent Publication No. 2002/0131075 and copending applications S.N. 10/235,263 and S.N. 10/235,557, subwindow 262 provides a graphical user interface for workflow management, including the creation, selection, and editing of job tickets, and a status window of scheduled jobs and documents.

The plug-in companion application of the preferred embodiment of the invention provides a function by way of which each page in a document to be printed can be assigned to a media type, selected from a paper catalog of media types that are available to the printer. In conventional systems, such as the SMARTBOARD companion application not modified according to this invention, the paper catalog has three media types: media that can be printed on both sides (duplex), media that can be printed only on one side (simplex), and media that cannot be printed (inserter media). For the DIGIMASTER 9110 and 9150i digital presses, selection of the third media type of inserter media is conventionally used only to create inserts into the job stream, and cannot be used for a printed document page that can be sourced by one of paper drawers 130, 132, such papers as standard body paper, standard printed covers, status pages, or regular paper substitutions.

According to the preferred embodiment of the invention, special page identification process 24 is performed by a human operator reviewing the pages of the documents to be printed, using the companion application described above, preferably by way of a graphical user interface as shown in Figure 3. According to this embodiment of the invention, in this example based upon the SMARTBOARD companion application to the ACROBAT authoring application, the human operator will mark each special page by selecting inserter media (i.e., media that cannot be printed) as the media type to be used for printing each special page. Preferably, this selection is made by way of the operator using thumbnail window 264T to preview and select those pages to be printed in color, and by using a pull-down menu or drag-and-drop operation to directly assign this invalid media type (for high-volume printer 122HV). Alternatively, the operator may select an alternative printer 122C (i.e., alternative to high-volume printer 122HV) for the special pages, in response to which the special page identification process 24 will substitute the selected media with the inserter-only media. For example, a media type such as "ColorInsert" is or will be preferably defined at high-volume printer 122HV as an "inserter-only" media type, by the operator loading this media into one of the trays of inserter 135 and identifying this media type, from the paper catalog, as loaded into that tray and not into one of the trays of paper sources 130, 132. This media type is thus identified at high-volume printer 122HV as "inserter-only" media, and in process 24 the operator selects this media type for each of the identified special pages. This media type thus does not correspond to a paper type that is available for printing at high-volume printer 122HV, and is thus an invalid media type for the main print job, but preferably corresponds to a media type available on another printer, such as color printer 122C. An output document in the PORTABLE DOCUMENT FORMAT (.pdf) or another ready-for-printer format results from this operation. As will be described in further detail below, this media assignment (whether directly by the user or by selection of the alternate printer) will result in an invalid job configuration when forwarded to high-volume printer 122HV, thus "marking" the special pages. Upon completion of identification process 24, the marked ready-for-printer file corresponding to the document to be printed, along with its job ticket, is submitted, in process 27. The original document is or will be stored at job preparation station 116, network server 118, or elsewhere in the network, permitting multiple printing runs over time, or subsequent editing for later runs. In addition, various "front-end" operations on the submitted print job are also performed, as will now be described. These operations are preferably performed by the computer resource at job preparation station 116, within the IMAGESMART DOCUMENT MASTERING software suite available from Heidelberg USA, Inc., although these operations may alternatively be performed by other computer resources including network server 118, and print servers 120, 120', using other software applications or functionality.

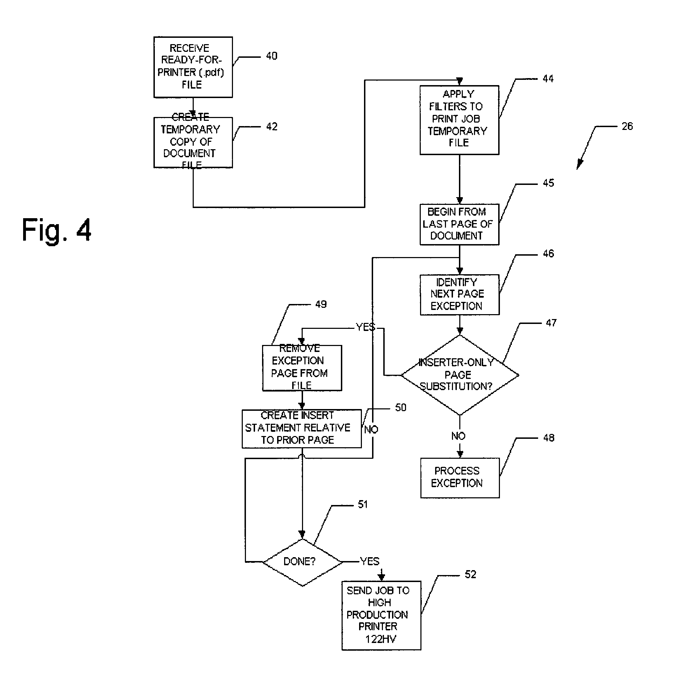

Referring back to Figure 2, filtering process 26 is next performed, by way of which the pages of the current print job are filtered according to the preparation of the print job in process 25. A detailed description of filtering process 26 will now follow, with reference to Figure 4. By way of example, the following description will refer to the front-end printing software as carrying out these operations, which for example is a functional portion of the IMAGESMART DOCUMENT MASTERING software suite implemented in job preparation station 116; it is to be understood, however, that the processes of Figure 4 may alternatively be performed by network server 118, external print server 120', print server 120, or other computer resources within the print shop environment, using other software applications or resources.

In process 40, the ready-for-printer file generated by job preparation station 116, for example in PORTABLE DOCUMENT FORMAT (.pdf), is retrieved from network server 118 and opened on job preparation station 116 (or whichever computer resource is performing filtering process 26) for filtering process 26 and submittal to high-volume printer 122HV. In those installations in which network server 118 is not present, job preparation station 116 will perform process 40 by retrieving the ready-for-printer file from its own disk storage resources. In process 42, a temporary copy of the document is made, for example from the document that is loaded into the ACROBAT authoring application, upon which filtering process 26 will be performed. In process 44, the front-end printing software applies various conventional filters to the temporary copy of the .pdf document file, such filters including stamping each printed page when in demonstration mode so that the output is not commercially usable, purging unused tabs to the top exit, and the like. According to the preferred embodiment of the invention, the remainder of process 26 applies a filter to replace the special pages with insert statements, as will now be described.

Beginning with the last page of the document (process 45), the front-end printing software executes process 46 to identify a page exception within the temporary copy of the document file. For the identified page exception, the front-end printing software then determines whether the exception is an invalid media type exception in which the desired media is inserter-only media, as selected in identification process 24 described above. Such an invalid media type exception means that the exception is due to its media type referring to an invalid media type for high-volume printer 122HV. As mentioned above, valid media types in the media catalog include those media that are available for simplex (one-sided) or duplex (two-sided) printing, and also inserter media. However, according to this embodiment of the invention, the inserter media cannot be printed by high-volume printer 122HV, in the form of a paper substitution, because inserter 135 is located downstream from marking engine 134 and fuser 136 in the example of Figure 1. In general, an invalid media type for a printer is valid or invalid according to how the media is used by a particular paper; as such, the inserter-only media is invalid for high-volume printer 122HV because it cannot be used a source for a page to be printed. If the page exception is not due to an invalid media type such as inserter-only media (decision 47 is NO), the front-end printing software then processes the exception in the conventional manner for the particular exception, in process 48.

If the page exception is due to an invalid media type such as inserter-only media (decision 47 is YES), the page exception is due to the presence of a special page that was identified in process 24. The front-end printing software then removes or deletes the "marked" page from the temporary working copy of the document for the current job, in process 49.

In process 50, the front-end printing software then replaces this "marked" or "special" page, in the main print job, with an "insert after" command, or statement, with the insert corresponding to an instruction to the eventual printer (e.g., high-volume printer 122HV) to insert a page in the printed document. In this example, the insert statement is an "insert after the previous page" command. According to this embodiment of the invention, the page number of the removed page is known from process 49, so process 50 is aware of the page to which the "insert after" refers (i.e., the preceding page). Further in the alternative, both "insert after" and "insert before" instructions may be utilized in the print job; for example, an "insert before" instruction may cause an insertion before the first page to be printed if the first page of the job is a "special" page, following which "insert after" instructions may be used. Typically, however, if the first page is a special page, the "insert after" will be a command to insert after page zero of the document.

It is apparent from this description that the removing of special pages from the document will change the number of pages in the document, so that some accounting must be done so that the insert commands are associated with the proper page location in the document. According to this embodiment of the invention, the front-end printing software and the printing functions do not refer to specific page numbers, but rather to a linked list in the stored file (and its temporary copy), such that the sequence of printed pages corresponds to this linked list. In other words, the operation of this front-end software and the print functionality simply operates in sequence according to this linked list. However, for each removed special page after the first removed page (again proceeding from the end of the document toward its beginning), the relative page numbers in the insert statement must be adjusted for the subsequent removal, as there is (at least) one fewer page in the document because of that second or later page removal. This renumber of all page exceptions after the current deleted page is carried out in process 52. Alternatively, if this functionality refers to page numbers (rather than page exceptions) within the document, the removal of pages must be accounted for in connection with the document page numbers and location of the insert commands in this process 52. Following process 52, the front-end software determines if additional page exceptions remain to be processed, in decision 53. If so (decision 53 is NO), control returns to process 46, by way of which the next page exception is analyzed and handled.

Filtering process 26 according to this embodiment of the invention is particularly efficient, considering that its operation analyzes only each page exception, rather than analyzing each page individually. If desired, of course, this process may be carried out on a page by page basis, if desired for this or for other purposes. Further in the alternative, while in this embodiment of the invention the page exceptions are processed from the last page to the first page of the document, to make the handling of the linked list more efficient, it may also be possible to process the pages starting with the first page of the document and working towards the end of the document.

Upon processing of all of the page exceptions in the current document temporary copy (decision 53 is YES), the processed print document file is then forwarded to the appropriate printer, namely high-volume 122HV, in process 54. Preferably, the modified temporary copy of the document is created for this print job only, and is not retained by network server 118 but is instead submitted to print server 120 of printer 122HV and then deleted. On the other hand, the file generated for the original document, including the marking of special pages, is retained by network server 118 or by job preparation station 116.

Referring back to Figure 2, the special pages identified in process 24 are forwarded to and printed by color printer 122C, in process 26. According to this embodiment of the invention, this operation is performed in the conventional manner, by the human operator extracting the identified special pages, for example by using a menu command within the authoring program for the selected special pages. Alternatively, a menu command may be available at document preparation station 116 to automatically select all identified special pages in a given document. In either case, for example, the submission can be performed in the ACROBAT application illustrated in Figure 3 by pull-down of the "File>Print" function, following which a print selection dialog will open. In this print selection dialog, the operator can confirm or modify the pages to be printed, which will default to the selected special pages from the thumbnail window 264T, and can select color printer 122C as the printer that is to print those selected pages. These pages are then printed by color printer 122C, according to the spooling and queuing in the print shop environment.

Preferably, the color printed pages from process 28 are collated into sets of the color pages following one another, for each copy of the eventual printed document, rather than grouped by page. Following process 28 and prior to such time as the bulk of the job is to be printed by high-volume printer 122HV, the collated color printed pages are placed into one of the available paper trays in inserter 135 of high-volume printer, ready for the high-volume generation of the final printed documents, in process 30.

In process 29, the main print job, based on the modified print job from process 26, is printed on high-volume printer 122HV. Typically, this print job involves the majority of the pages of the document, permitting much of the job to be printed on the highest-throughput; lowest-cost, printing resource, such as high-volume black and white printer 122HV. During process 29, upon high-volume printer 122HV reaching an "insert after" command as described above, inserter 135 will insert a page from one of its paper trays into the output flow; in this case, as evident from this description, the inserted page will be a color (or other "special") page printed by color printer 122C. Finishing station 138 will collate the printed output in process 32, including both the black-and-white and color pages (or "special" pages) in the proper order within each copy.

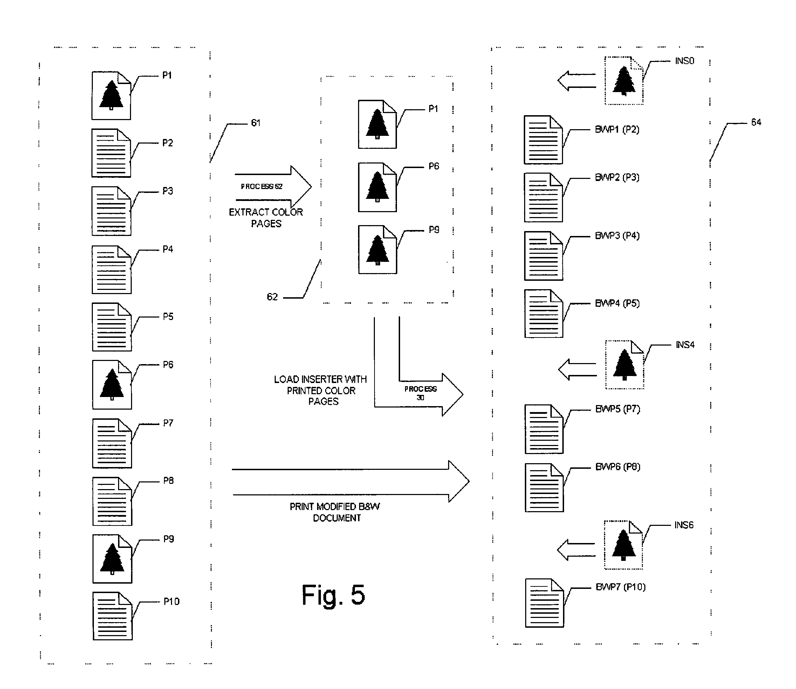

Figure 5 illustrates an example of the marking and extracting of distribution process 26, and the resulting insertion of the extracted special pages in printing process 29. Document 61 illustrates an exemplary ten-page original document, including black and white text pages P2 through P5, P7, P8, and P10. Pages P1, P6, and P9 include full-color images, and are desired to be printed by a full-color printer such as printer 122C. Color pages P1, P6, and P9 are extracted from original document 61, for example in color print process 28 described above, creating document 62 that includes only color pages P1, P6, P9, and that is printed by color printer 122C in process 28.

As described above, filtering process 26 both removes color pages P1, P6, P9, as mentioned above, and substitutes "insert after" commands in place of those extracted pages, from the temporary copy of document 61 that is submitted to high-volume printer 122HV. In the example of Figure 5, document 64 illustrates the modified black and white document (as a temporary copy) to be printed by high-volume printer 122HV. In this example, the first color page P1 is replaced by an "insert after" command, which in this example refers to page zero, for inserting the first page of the printed document. The command to insert after page 0 may instead be interpreted as a command to insert a sheet before page 1, at high-volume printer 122HV, if that capability is available. This inserted sheet will be color page P1 from original document 61.

In the example of Figure 5, the modified document 64 thus includes a sequence of four black and white pages BWP1 through BWP4, which correspond to pages P2 through P5 of the original document, because of the removal of original color page P1. Original document page P6 is a color page, and was thus removed for printing by color printer 122C and replaced by an "insert after" command INS4, meaning that inserter 135 is to insert a page after page 4 of the document as printed (which is after page P5 of original document 61). This inserted page will be color page P6 of original document 61, as printed from color document 62. The modified document continues with the fifth and sixth black and white pages BWP5, BWP6 corresponding to pages P7 and P8 of original document 61, and extracted color page P9 was replaced by an "insert after" command INS6, meaning that inserter 135 in high volume printer 122HV is to insert a sheet after the sixth printed page BWP6, which corresponds to original page P8 of original document 61. This inserted page will be color page P9 from original document 61, which was printed by color printer 122C and loaded into inserter 135 of high-volume printer 122HV. This completes the printing of one copy of modified document 64, inserting color pages from document 62 at the appropriate locations according to the "insert after" commands.

As evident from Figure 5 and this description, the page numbers of the pages as printed and of the insert statements become shifted from the original because of the removal of pages earlier in the document. In connection with the insert statements, this shifting of pages was accounted for by process 52 described above. In the example of Figure 5, original pages P1, P6, and P9 were removed. Working from the end of the document, at the time that page P9 was first removed, original pages P1 and P6 were still in the document, and the original insert statement that replaced the removed page P9 was to insert after page P8 ("INS8"). When page P6 was removed and replaced with "insert after" statement INS5, all page numbers after original page P6 also decremented (page 8 becoming page 7), and so the insert command for original page P9 was adjusted in process 52 to "insert after" statement INS7. Finally, upon removal of original page P1, both of the "insert after" commands INS7 and INS5 were adjusted to account for the removed page P1, becoming "insert after" commands INS6 and INS4 as shown in Figure 5.

The printing and inserting process illustrated in Figure 5 for this example is then repeated for the desired number of copies of the output document. In each case, the "special" (e.g., full-color) pages that were extracted and printed on a different printing resource, such as color printer 122C, are inserted into the proper location of the eventual document copies output by high-volume printer 12HV.

According to this invention, therefore, an automated technique for preparing complex documents is provided. The automation facilitates the identification of special pages, such as full color pages, that require specialized printing facilities, while permitting the bulk of the eventual document to be printed on high-throughput and low-cost printing machines. The automated extraction and insertion not only reduces the human costs that are otherwise involved in collating documents, but also takes advantage of the precision, high-throughput, collating mechanisms available in the finishing stations of modem high-throughput printers. Human intervention is permitted in the defining and identifying of the special pages, to permit the management of color and other special printing costs through the use of human judgment in determining which pages require color or other special printing, and permitting black and white printing of those pages that may have color or special attributes, but for which black and white printing is sufficient.

In addition, the original document preferably remains in its original ready-for-printer form. Specifically, the original document as stored on network server 118 or on job preparation station 116 includes the full-color pages at the appropriate locations. Rather, it is only the modified document, generated from the original document according to the method of this invention, that is forwarded to the high-volume printer. By maintaining the original document in its original form, the document may be printed again later, perhaps with different pages printed on the color printer, or other changes made in the submission of the document for printing. In addition, the original document may be printed as a pure black and white job, such as may be useful for proofing.

The foregoing description uses the case of full color pages as the "special" pages that are to be printed on a different printing resource. Alternatively, the "special" nature of those pages may involve attributes other than color versus black and white. For example, the document to be printed may be a commercial catalog that includes many pages that do not change in content over time, in combination with price lists or other pages for which the content frequently changes. In this example, with reference to Figure 1, the "special" pages refer to the time-varying pages such as the price lists, which are separately printed either on high-volume printer 122HV itself, or on another printing resource such as color printer 122C, and the printed special pages are loaded into inserter 135 of high-volume printer 122HV. The main document, with the non-time-varying content, may then be printed, with inserter 135 of high-volume printer 122HV inserting the preprinted time-varying "special" pages at the appropriate locations in the overall document.

While the present invention has been described according to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are within the scope of this invention as subsequently claimed herein.

### Reference List

- 20 - 52: process (-steps)
- 61,62,64: document
- 114: storefront workstation
- 116: job preparation station
- 118: network server
- 120: printer server,
- 120': external printer server
- 122: printing output devices
- 122C: Color printer
- 122HV: high volume printer
- 130a - 130c: paper drawer
- 132a - 132c: paper drawer
- 134: electrographic marking engine
- 135: inserter
- 136: fuser
- 138: finishing station

- 262: window
- 264: window
- 264 P, T: subwindows

## Claims

1. A method of printing a document from a digital file, using a plurality of print output devices, wherein a first print output device includes a plurality of media sources for supplying media of at least one selected type to a marking engine, and also includes an inserter for inserting pages of media at selectable locations within pages of an output document printed by the marking engine, the method comprising:
storing an input document in a machine readable form;
identifying at least one page of the stored input document as a special page by assigning a media type to the identified page that differs from the at least one selected type suppliable by the media sources of the first print output device;
generating a modified print document from the stored input document, by replacing each of the identified special pages with an insert command to the first print output device to insert a page from its inserter;
printing the identified special pages using one of the plurality of print output devices to produce at least one printed copy of the special pages;
loading the inserter of the first print output device with the at least one printed copy of the special pages; and
printing the modified print document using the first print output device.

2. The method of claim 1, wherein the identifying step comprises, for each of the special pages, assigning an inserter media type to the identified page.

3. The method of claim 2, wherein the assigning of an inserter media type to a page of the input document results in an invalid job configuration.

4. The method of claim 1, wherein the special pages correspond to pages to be printed in color;
and wherein the first print output device is a black and white printer.

5. The method of claim 4, wherein the step of printing the special print document uses a color print output device.

6. The method of claim 1, wherein the special pages correspond to pages having updated content, relative to pages of the stored input document that are not special pages.

7. The method of claim 1, wherein the identifying step comprises:
viewing pages of the stored input document via a graphical user interface at a computer resource;
selecting one or more of the special pages of the input document; and
assigning, to the selected one or more pages, the media type that differs from the at least one selected type suppliable by the media sources of the first print output device.

8. The method of claim 7, wherein the viewing step comprises:
executing, upon the computer resource, a companion application in combination with an authoring application, wherein a first graphical user interface window corresponding to the authoring application appears in combination with a second graphical user interface window corresponding to the companion application.

9. The method of claim 8, wherein the pages of the stored input document are viewed within the first graphical user interface window.

10. The method of claim 9, wherein the first graphical user interface window corresponds to a thumbnail view of a plurality of pages of the stored input document.

11. The method of claim 9, wherein the assigning step is performed by selecting the media type using the second graphical user interface window.

12. The method of claim 1, wherein the stored input document is in a ready-for-printer format.

13. The method of claim 1, wherein the special print document and the modified print document are in a ready-for printer format.

14. The method of claim 13, wherein the ready-for-printer format is the Portable Document Format.

15. A print shop environment, comprising:
a plurality of output print devices, a first one of the plurality of output print devices including a plurality of media sources for supplying media of at least one selected type to a marking engine, and also includes an inserter for inserting pages of media at selectable locations within pages of an output document printed by the marking engine; and
at least one computer resource for managing the plurality of output print devices, the at least one computer resource programmed to perform a sequence of operations comprising the steps of:
storing an input document in a machine readable form;
identifying at least one page of the stored input document as a special page by assigning a specific media type to the identified page that differs from the at least one selected type suppliable by the media sources of the first print output device;
generating a modified print document from the stored input document, by replacing each of the identified special pages with an insert command to the first print output device to insert a page from its inserter;
printing the identified special pages using one of the plurality of print output devices to produce at least one printed copy of the special pages;
loading the inserter of the first print output device with the at least one printed copy of the special pages; and
printing the modified print document using the first print output device.

16. The print shop environment of claim 15, wherein the at least one computer resource comprises a job preparation workstation and a print server, coupled to one another and to the plurality of print output devices over a network.

17. The print shop environment of claim 16, wherein the job preparation workstation is programmed to perform the identifying and generating steps.

18. The print shop environment of claim 16, wherein the stored input document is stored on the job preparation station.

19. The print shop environment of claim 15, wherein the at least one computer resource further comprises a network server
wherein the stored input document is stored on the network server.

20. The print shop environment of claim 15, wherein the identifying step comprises, for each of the special pages, assigning an inserter media type to the identified page.

21. The print shop environment of claim 15, wherein the special pages correspond to pages to be printed in color;
wherein the first print output device is a black and white printer;
and wherein the step of printing the special print document uses a color print output device.

22. The print shop environment of claim 15, wherein the special pages correspond to pages having updated content, relative to pages of the stored input document that are not special pages.

23. The print shop environment of claim 15, wherein the at least one computer resource comprises a job preparation workstation, a print server, and a network server, coupled to one another and to the plurality of print output devices over a network;
and wherein the job preparation workstation is programmed to execute a companion application in combination with an authoring application, wherein a first graphical user interface window corresponding to the authoring application appears in combination with a second graphical user interface window corresponding to the companion application.

24. The print shop environment of claim 15, wherein the special print document and the modified print document are in a ready-for printer format.

25. The print shop environment of claim 24, wherein the ready-for-printer format is the Portable Document Format.
